# EUROPEAN PATENT APPLICATION

(11) **EP 1 455 292 A1**
(43) Date of publication of application: **08.09.2004**
(21) Application number: 03445031.2
(22) Date of filing: 03.03.2003
(51) Int. Cl.: G06F 17/60

(54) **Rights request method**

(71) Applicant: Sony Ericsson Mobile Communications AB, 221 88 Lund (SE)
(72) Inventor: Andersson, Stefan, 230 41 Klagerup (SE); Hakansson, Thomas, 222 25 Lund (SE)
(74) Representative: Lindberg, Olle Nils Olof

(57) **Abstract**

Method for management of digital rights, wherein digital media content is provided from a content provider (1) in a protected format to a user client (2), such as a mobile phone. The client initiates execution of an operation associated with said digital media content, but finds out that the client lacks the appropriate digital rights for performing said operation. The client automatically transmits a rights request signal (5), requesting digital rights for said operation, to a rights issuer device (3). The rights issuer device creates a new rights object related to said operation, and transmits it to said client. The client downloads the rights object and then reinitiates the operation.

## Description

### Field of the invention

The present invention relates generally to digital rights management for securing distribution, promotion and sale of digital media. More specifically, the invention relates to means for users to request such digital rights dependent on a predetermined need or desire for using or accessing digital media data.

### Background

The first commercially attractive cellular telephones or terminals were introduced in the market at the end of the 1980's. Since then, the mobile phone industry has had an enormous development both regarding quality of service and transmission capabilities, as well as the technology for producing advanced communications terminals. A lot of effort has been made in making smaller terminals, with much help from the miniaturisation of electronic components and the development of more efficient batteries. In only a couple of decades the communication systems have gone from analogue to digital, and at the same time the dimensions of the communication terminals have gone from briefcase size to the pocket size phones of today. Today, numerous manufacturers offer pocket-sized terminals with a wide variety of capabilities and services, such as packet-oriented transmission and multiple radio band coverage. Still today, mobile phones are getting smaller and smaller and the size is generally considered to be an important factor for the end customer. The development in electronics has made it possible to miniaturise the components of the terminals, at the same time making the terminals capable of performing more advanced functions and services. The development of new transmission schemes, the so-called 3^{rd} generation mobile system standing at the door and the 4^{th} generation to be expected maybe ten years later, also provides the possibility to convey more advanced data to the wireless communication terminals, such as real time video.

The coming generation of mobile systems will provide capabilities of transmitting and accessing more advanced data. Still, the memory space in the communication terminal will be limited, as will the processor power usable for processing e.g. media data. So, even if it will be possible to access a wider range of different kinds of data, the terminal may be a limiting factor. Developers of media services or commercials are anxious to be able to provide digital information that can be accessed by the consumers through their terminals, without requiring special terminals, extensive memory space, or occupying a lot of time for downloading and presentation.

Digital Rights Management, DRM, is a system for protecting the copyrights of digital content that is distributed online. It may also include the accounting for paying royalties to the authors of the material. In the music world, a DRM system provides a container format that includes album and track titles and a set of rules that enforce copyright compliance which software and hardware players must support in order to play back the material. Examples of digital media content include personal images, wallpapers, ring signals from musical artists, branded games etc. Content providers can control how users may use different types of content and related services, e.g. Multimedia Message Service, MMS, in devices, such as mobile phones, smart phones or Personal Digital Assistants, PDAs. This is done by defining usage rights for the content. By defining different rights, content providers have flexibility in the way they can publish and sell content. Rights can be defined so that a picture can be used by subscribers only, or rights can be defined so that a ring signal can be played only a limited number of times or for a limited period of time. Rights can also be defined so that the user is not able to forward content to other devices. DRM is a key feature for all parties involved in the content value chain

The DRM field holds a myriad of solutions with very different characteristics. Some of them support limited functionality for requesting new rights, e.g. MG, while others have no such capability, e.g. OMA DRM.

A problem associated with DRM is how provide a scheme making it possible for users to indicate the rights they want. The rights issuer will have to try to get that information out of band, e.g. through the browser, or by knowing which rights have been issued to this particular client. This scheme may also involve cumbersome user interaction.

### Summary of the invention

A general object of the invention is therefore to provide means for user terminals to request digital rights dependent on a predetermined need or desire for using or accessing digital media.

According to a first aspect, this object is fulfilled by a method for management of digital rights, wherein digital media content is provided in a protected format to a user client; execution of an operation associated with said digital media content is initiated on said client; and said client automatically transmits a rights request signal, requesting digital rights for said operation, to a rights issuer device, dependent on the scope of current rights objects.

In one embodiment, said current rights objects are stored in said client; said current rights object are automatically investigated by the client upon detection of initiation of execution of said operation; and said rights request signal is transmitted if said current rights objects do not cover said operation.

Initiation of said execution may be made by said user attempting to perform said operation.

Preferably, said rights issuer device creates a new rights object related to said operation; and said rights object is transmitted to said client.

In one embodiment said new rights object is installed in the client; and execution of said operation is reinitiated.

Preferably said rights request signal includes said current rights objects.

In one embodiment said new rights object replaces a current rights object in the client.

Furthermore, a counter in said client may be reset dependent on the new rights objects.

Said new rights object may be enclosed in a new set of rights objects; wherein said new set of rights objects replaces said current rights objects in the client.

In one embodiment said rights request signal includes an ID marking associated with current rights objects stored in said client.

In such an embodiment, said rights issuer device preferably responds to said request signal with a response signal including identification of an ID marking, and an instruction for an action to be taken by said client on a rights object to which said ID marking relates.

Preferably said rights request signal includes information on said operation, and in one embodiment said rights request signal includes identity data relating to said user or said client.

In one embodiment, said rights request signal includes content ID information, relating to the digital media content for which said operation was initiated.In one embodiment, a cookie including a service ID for said client is stored in said client, and said rights issuer device accesses said cookie in response to reception of said service request signal.

In such an embodiment, said rights issuer device preferably reads said service ID and retrieves new rights related to a service to which said service ID relates; whereupon a new rights object related to said digital media content and said service is created and sent to said client.

In one embodiment, a service ID for said client is stored in said client, and said service ID is included in a URL for the rights issuer device in said service request signal.

In such an embodiment, said rights issuer device preferably reads said service ID in said URL upon reception of said rights request signal and retrieves new rights related to a service to which said service ID relates; whereupon a new rights object related to said digital media content is created and sent to said client.

In a preferred embodiment, said service is subscription-based.

In an embodiment suitable for super distribution, said digital media content is encrypted with a content encryption key prior to being provided to the client.

In one preferred version of this embodiment, the content ID information is included in the rights request signal, and potentially information on the operation initiated. Thereupon, the rights issuer device maps said content ID in the received rights request signal to the corresponding content encryption key, encrypts said content encryption key with a first user encryption key associated with said client, places the encrypted content encryption key in a rights object, and transmits said rights object to said client.

In another preferred version of this embodiment, said content encryption key is encrypted using an issuer encryption key; and said encrypted content encryption key is provided to the client together with the encrypted digital media data. Preferably, the content encryption key, encrypted with the issuer encryption key, is included in said rights request signal.

Thereupon, the rights issuer device decrypts the content encryption key in the rights request signal with said issuer encryption key, encrypts said content encryption key with a first user encryption key associated with said client, places the encrypted content encryption key in a rights object, and transmits said rights object to said client.

When the client retrieves the encrypted content encryption key from the received rights object, the decrypts the content encrypting key with a second user encryption key, and decrypts the digital media content with said content encryption key.

According to a second aspect of the invention, the stated object is fulfilled by a method for updating of digital rights in a user client, wherein the user client registers for a subscription-based service; digital media content is provided within said subscription-based service in a protected format to the user client; and said client automatically transmits a rights request signal, requesting digital rights for said operation, to a rights issuer device, with a periodicity defined by said subscription.

According to a third aspect of the invention, the stated object is fulfilled by a method for updating of digital rights in a user client, wherein the user client registers for a subscription-based service; digital media content is provided within said subscription-based service in a protected format to the user client; a rights issuer device detects that new right objects associated with said subscription are available; the rights issuer device pushes a message to said client that new right objects are available; and said client automatically transmits a rights request signal, requesting said new digital rights objects, to said rights issuer device, dependent on said digital media content.

In a preferred embodiment of this third aspect, the rights issuer device pushes said message through SMS. In one alternative embodiment, the rights issuer device pushes said message to a Subscriber Identity Module SIM in said client, which SIM pushes the message to said client using SIM Application ToolkitThe operation referred to comprises in one embodiment the step of rendering content of a data file of said digital media content.

The operation referred to comprises in one embodiment the step of copying a data file of said digital media content.

The operation referred to comprises in one embodiment the step of sending a data file of said digital media content.

The operation referred to comprises in one embodiment the step of modifying a data file of said digital media content.

In one preferred embodiment according to said first aspect, the method further comprises the steps that: execution of said operation by said client requires permission from said issuer device; said issuer device sends a permission signal to said client in response to said rights request signal; and said permission signal enables said client to execute said operation. In such an embodiment, no particular digital rights objects are transmitted to the client, only a simple permission code or the like, which enables a computer system of the client to render the digital media content.

According to a fourth aspect of the invention, the stated object is fulfilled by a computer program product, for use with a computer system in a communication client, comprising computer program code means devised to make said computer system perform the steps of:
- initiating execution of an operation associated with digital media content provided in a protected format in said client; and
- automatically triggering transmission from said client of a rights request signal, requesting digital rights for said operation, to a rights issuer device, dependent on the scope of current rights objects.

In selected embodiments, the computer program product further comprises computer program code means devised to make said computer system perform any of the steps previously described for the first to third aspects of the invention.

In a preferred embodiment, the computer program product further comprises a computer readable medium on which said computer program code means are stored.

According to a fifth aspect of the invention, the stated object is fulfilled by a radio communication client, including a computer system and computer program code means devised to make said computer system perform the steps of:
- initiating execution of an operation associated with digital media content provided in a protected format in said client; and
- automatically triggering transmission from said client of a rights request signal, requesting digital rights for said operation, to a rights issuer device, dependent on the scope of current rights objects.

In selected embodiments, the radio communication client further comprises computer program code means devised to make said computer system perform any of the steps previously described for the first to third aspects of the invention.

Preferably, the radio communication client further comprises a computer readable medium on which said computer program code means are stored.

### Brief description of the drawing

The features and advantages of the present invention will be more apparent from the following description of the preferred embodiments with reference to the accompanying drawings, on which
Fig. 1 schematically illustrates of a system reference model of a first embodiment of a procedure according to the invention;
Fig. 2 schematically illustrates of a system reference model of a second embodiment of a procedure according to the invention; and
Fig. 3 schematically illustrates of a system reference model of a third embodiment of a procedure according to the invention.

### Detailed description of preferred embodiments

The present description relates to the field of digital rights management, and is applicable to e.g. the field of radio communication terminals. The term radio terminal or communication terminal, also denoted terminal in short and client in this disclosure, includes all mobile equipment devised for radio communication with a radio station, which radio station also may be mobile terminal or e.g. a stationary base station. Consequently, the term radio terminal includes mobile telephones, pagers, communicators, electronic organisers, smartphones, PDA:s (Personal Digital Assistants) and DECT terminals (Digital Enhanced Cordless Telephony). Further, the present invention is equally applicable to stationary devices, and for transmission to and from stationary devices. Such includes e.g. desktop or laptop computers, but also base station devices included in mobile telephony networks. Furthermore, it should be emphasised that the term comprising or comprises, when used in this description and in the appended claims to indicate included features, elements or steps, is in no way to be interpreted as excluding the presence of other features elements or steps than those expressly stated.

Exemplary embodiments will now be described with references made to the accompanying drawing.

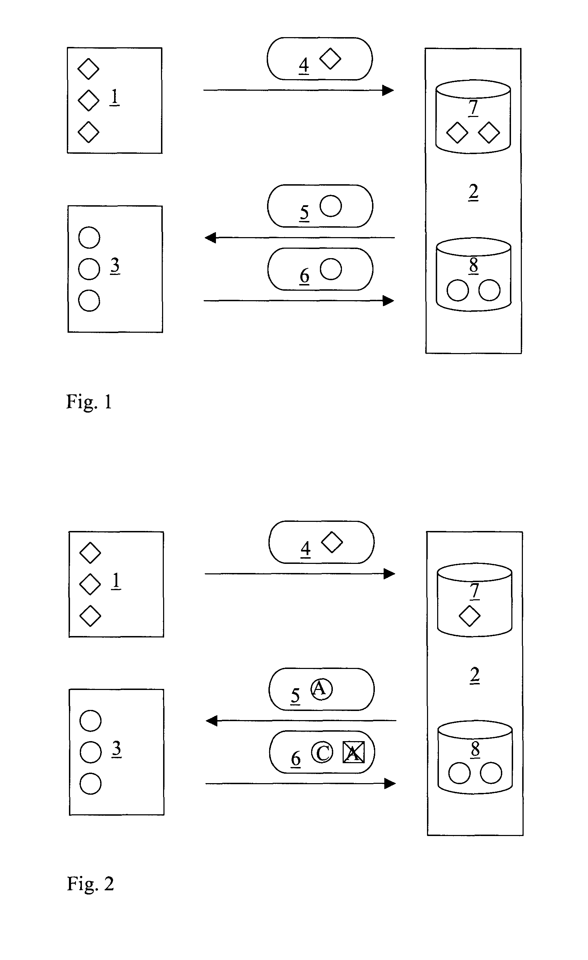

The basic principle in the solution according to the invention is that the client indicates to the rights issuer which rights it needs, e.g. what it intends to do, and the rights it currently has. An first exemplary embodiment of this solution is described with reference to Fig. 1.

A client 2, such as a mobile telephone, a personal computer or a PDA, has received a digital media content by downloading or transmission 4 from a content provider 1. Media content is indicated by the rhombic elements in Fig. 1. The media content, or access data referring to it, is stored in a first memory 7 in the client 2.

The client 2 is tries to perform an operation and finds that it does not have the appropriate digital rights for this operation. The operation may be automatically initiated by the client, or initiated by a client user through a client interface.

In order to obtained the required rights, the client 2 gets in contact with a rights issuer device 3, such as a server, in which digital rights objects related to different services or operations are stored. The rights objects are indicated in the drawing by the circular elements. In one embodiment, the present or current rights objects are stored in the client in a second memory 8. The present set of rights, or only a single rights object, is included in a rights request signal 5, preferably together with information on the operation intended or initiated, such that the rights issuer is informed about which rights are missing. Furthermore, said rights request signal may include identity data relating to said user, or said client, e.g. for billing purposes.

If the client has no previous rights for the object related to the intended operation, the client only informs the rights issuer about what it intends to do, e.g. play a game or copy a record. In this case, the rights request signal 5 does not include any rights objects. If the client has rights for this object, but these are not valid due to some constraint, the client informs the rights issuer, by means of said rights request signal 5, about what it intends to do, the current rights it holds and optionally the state of any consumable constraints, e.g. count values. This information is consequently preferably also included in the rights request signal 5, in such a case.

The rights issuer 3 creates a new rights object, or a set of rights objects, and sends them to the client 2 in a response signal 6.

The client 2 installs the rights objects in the second memory 8, and retries or reinitiates the original operation. If the new rights objects are designed to replace the old, these old rights objects can now be deleted. This can be implicitly indicated by always assuming that the new shall replace the old. In another embodiment, it is explicitly indicated in the response signal 6 which rights objects that should be deleted in the client 2. Fig. 2 illustrates such an embodiment, by way of a schematic example. Herein, each rights object is assigned an ID marking, such as a number. This ID marking may be applied to the objects when they are stored in the client 2. In another embodiment, the tagging of the ID markings is performed only upon sending the rights request signal 5.

Furthermore, a counter and other state information, which are associated with the rights objects though not included in the rights objects, may optionally also be deleted or changed when new rights objects are installed. For instance, if a right object gives a client the right to execute an application five times, a counter in the client will be used to keep track on how many times the application has been used and how many remain. Even if all five have been used or if there are right left, the counter needs to be reset if new rights pertaining to the application in question are installed. If the new rights adds the right to make five new executions, these may be added with any remaining rights. Alternatively, all prior rights will be deleted before the new rights are installed.

In the illustrated embodiment of Fig. 2, the rights request signal 5 includes a rights object with an ID marking A, associated with a certain digital content, but which rights object A is not sufficient for allowing said operation. The rights request signal 5 also includes information on which operation has been initiated, i.e. the operation the client wishes to perform but does not have the rights for.

The rights request signal 5 is sent to the rights issuer device 3, in which the appropriate rights C for said operation are created or retrieved from a memory.

The new rights object C is transmitted in a response signal 6 to the client 2.

Furthermore, an instruction for an action to be taken in the client 2 may be implemented in a field in the transmission protocol for the response signal 6. Such an instruction may be to delete the previous rights object A, as is indicated by the cross over the ID marking A for the previous rights object. The latter alternative implements a server-based form of rights garbage collection in the rights issuer device 3, and has the benefit of not having to send the old rights object A back to the client 2. It can also be used to solve another problem, which is how to merge rights. In other words, how a set of rights objects can be combined to for a new minimal set of objects. With the approach according to the invention, this can be handled by a policy in the rights issuer device 3. So instead of standardising the behaviour in the terminal it becomes a business decision for the rights issuer.

In an another embodiment, the rights request protocol is utilised for another purpose, namely to minimise the memory requirements for the rights objects database 8 in the client 2. Instead of keeping all rights objects in a database 8, which is the normal approach, the rights objects are stored in the rights issuer device or server, and only a small cache of rights objects are stored in the client 2. This not only reduces the memory consumption in the client 2 but it also solves the problem of keeping a backup of the rights objects.

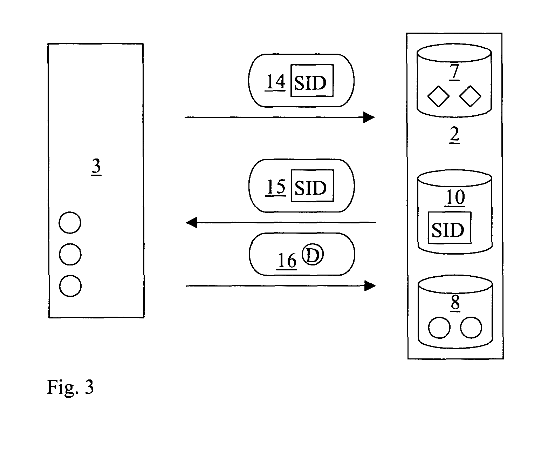

The present invention is further usable for subscription-based services, illustrated by way of example in Fig. 3. It should be noted that for the sake of simplicity, it is not indicated in Fig. 3 how the digital media content, represented by the rhombic elements in memory 7, has been obtained. The skilled person realises that such data may e.g. be accessed and downloaded from a network or from a data carrier. In one example of this embodiment the following procedure would apply.

The client 2 registers at a service issuer device 3 for a subscription service, for example by browsing.

The service and rights issuer 3 creates a unique service ID, SID, for the particular client 2 and transmits it in a SID signal 14 to the client 2 in which it is stored in a cookie in a memory 10.

The client 2 initiates or tries to perform an operation associated with digital content associated with said service, and finds that it does not have the appropriate rights.

The client sends a rights request signal 15 to the rights issuer device 3 to get the appropriate rights, and includes the cookie with the SID in the rights request signal 15.

The rights issuer device reads the cookie to retrieve the SID.

Based on the subscription associated with this SID the rights issuer device 3 creates a new rights object, or set of objects, D, and sends it or them to the client 2 in a response signal 16.

The client 2 installs the rights objects D and retries the original operation.

By this procedure, only the rights needed at the particular instant are stored in the client 2, leaving more of the accessible memory space in the client 2 available for other purposes.

The procedures according to the invention, exemplified by the embodiments above, are easily implemented by exchanging XML-data, in the case of OMA DRM, but they could also be implemented by adding information to the rights issuer URL that is stored in the DCF. The SID can be added to the rights issuer URL of the DCF by a content server.

In one embodiment, the rights issuer URL is used for notifying the rights issuer of the identity of the client requesting rights, by initially giving different rights issuer URLs the clients. When the client sends the rights request signal to the rights issuer, the URL to the rights issuer is also sent along. When the rights issuer reads the URL used, this information is used to retrieve the ID of the client.

In another embodiment the client includes means for manipulating the URL, by adding client identification information, before sending the rights request signal including the URL to the rights issuer.

The following security requirements on the rights request protocol can be identified:
Client authentication;
Server authentication;
Integrity protection.

These are the same requirements you will find for any DRM exchange, so you can expect that most DRM schemes fulfil them some way or the other. The security functionality is therefore not included in this description, since it is not directly relevant to the particulars of the present invention, and since it is assumed that it is already in place in the underlying DRM scheme. Nevertheless it can quite easily be added if necessary.

In an embodiment of the invention, new digital rights are not necessarily requested after an operation has been initiated and has failed. Instead, or additionally, the client automatically and periodically issues rights requests. Such periodical requests may be connected to a subscription service, such that any new available rights within the service are periodically fetched, e.g. once a month.

Furthermore, in one embodiment the rights request signal may be triggered by a pushed message from the rights issuer device, informing clients that new rights are available. The new rights may thereafter be directly requested by the client, or at a later stage once an operation to which they relate is to be used.

The present invention is suitable for use in relation to super distribution of digital content. At super distribution one has to make sure that the recipient client is capable of decrypting the data of the digital content. In order to do so, the recipient client must have access to the encryption key used to encrypt the content data, the content encryption key CEK. The CEK is provided together with the rights objects, and encrypted in a way such that only predetermined clients are capable of decrypting it. Consequently, super distribution requires that the rights issuer can retrieve the CEK and encrypt it such that it can only be read by the pre-selected user or group of users. This may be accomplished in at least two ways.

In a first particular embodiment, the rights issuer holds a database in which content ID information is mapped to the associated CEK. A rights request signal from a client is then forced to include said content ID information. This content ID information, as received by the rights issuer device in the rights request signal, is then used in the issuer device to retrieve the CEK previously used to encrypt the media content to which said content ID relates. The retrieved CEK is then encrypted using a first user encryption key for the recipient client. The encrypted CEK is then placed in the rights objects associated with the media content, and sent to the client. The client may then decrypt the CEK using a second user encryption key.

In a second particular embodiment, the CEK is originally encrypted by the rights issuer using a private issuer encryption key, and transmitted or provided together with the digital media content. When the user client requires the CEK to decrypt the digital media content, the rights request signal is transmitted including the encrypted CEK. Once the rights issuer device receives the rights request signal, the CEK is decrypted, and then encrypted using using a first user encryption key for the recipient client. The encrypted CEK is then placed in the rights objects associated with the media content, and sent to the client. The client may then decrypt the CEK using a second user encryption key.

The first and second user encryption keys may be keys of a public key system or a symmetrical system.

The main merit of this invention is that it provides an efficient method for requesting rights from a server with minimal user interaction. It can also be used to enable subscription based DRM services where the user automatically gets the rights associated with his service agreement.

In addition, the scheme provides means to create server-based garbage collection or rights compression by giving the server the possibility to remove rights objects and replace them with new ones.

Furthermore, the present invention can be used to set up a system where the rights objects for a client are stored on a server, whereas the client will only hold a small cache of rights objects.

The principles of the present invention have been described in the foregoing by examples of embodiments or modes of operations. However, the invention should not be construed as being limited to the particular embodiments discussed above. The above described more or less specific embodiments should therefore be regarded as illustrative rather than restrictive, and it should be appreciated that variations may be made in those embodiments by persons skilled in the art, without departing from the scope of the present invention as defined by the appended claims.

## Claims

1. Method for management of digital rights, **characterised in that**:
- digital media content is provided in a protected format to a user client;
- execution of an operation associated with said digital media content is initiated on said client; and
- said client automatically transmits a rights request signal, requesting digital rights for said operation, to a rights issuer device, dependent on the scope of current rights objects.

2. The method as recited in claim 1, **characterised in that**:
- said current rights objects are stored in said client;
- said current rights object are automatically investigated by the client upon detection of initiation of execution of said operation; and
- said rights request signal is transmitted if said current rights objects do not cover said operation.

3. The method as recited in claim 1, **characterised in that**:
- initiation of said execution is made by said user attempting to perform said operation.

4. The method as recited in claim 1, **characterised in that**:
- said rights issuer device creates a new rights object related to said operation; and
- said rights object is transmitted to said client.

5. The method as recited in claim 4, **characterised in that**:
- said new rights object is installed in the client; and
- execution of said operation is reinitiated.

6. The method as recited in claim 1, **characterised in that**:
- said rights request signal includes said current rights objects.

7. The method as recited in claim 5, **characterised in that**:
- said new rights object replaces a current rights object in the client.

8. The method as recited in claim 5, **characterised in that**:
- a counter in said client is reset dependent on the new rights objects.

9. The method as recited in claim 5, **characterised in that**:
- said new rights object is enclosed in a new set of rights objects; and
- said new set of rights objects replaces said current rights objects in the client.

10. The method as recited in claim 6, **characterised in that**:
- said rights request signal includes an ID marking associated with current rights objects stored in said client.

11. The method as recited in claim 9, **characterised in that**:
- said rights issuer device responds to said request signal with a response signal including identification of an ID marking, and an instruction for an action to be taken by said client on a rights object to which said ID marking relates.

12. The method as recited in claim 1, **characterised in that**:
- said rights request signal includes information on said operation.

13. The method as recited in claim 1 or 11, **characterised in that**:
- said rights request signal includes content ID information.

14. The method as recited in claim 1, **characterised in that**:
- said rights request signal includes identity data relating to said user.

15. The method as recited in claim 1, **characterised in that**:
- said rights request signal includes identity data relating to said client.

16. The method as recited in claim 1, **characterised in that**:
- a cookie including a service ID for said client is stored in said client; and
- said rights issuer device accesses said cookie in response to reception of said service request signal.

17. The method as recited in claim 16, **characterised in that**:
- said rights issuer device reads said service ID and retrieves new rights related to a service to which said service ID relates; and
- a new rights object related to said digital media content and said service is created and sent to said client.

18. The method as recited in claim 1, **characterised in that**:
- a service ID for said client is stored in said client; and
- said service ID is included in a URL for the rights issuer device in said service request signal.

19. The method as recited in claim 18, **characterised in that**:
- said rights issuer device reads said service ID in said URL upon reception of said rights request signal and retrieves new rights related to a service to which said service ID relates; and
- a new rights object related to said digital media content is created and sent to said client.

20. The method as recited in claim 17 or 19, **characterised in that**:
- said service is subscription-based.

21. The method as recited in claim 1, **characterised in that**:
- said digital media content is encrypted with a content encryption key prior to being provided to the client.

22. The method as recited in claim 13 and 20, **characterised in that** the rights issuer device:
- maps said content ID in the received rights request signal to the corresponding content encryption key;
- encrypts said content encryption key with a first user encryption key associated with said client;
- places the encrypted content encryption key in a rights object; and
- transmits said rights object to said client.

23. The method as recited in claim 20, **characterised in that**:
- said content encryption key is encrypted using an issuer encryption key; and
- said encrypted content encryption key is provided to the client together with the encrypted digital media data.

24. The method as recited in claim 22, **characterised in that**:
- the content encryption key, encrypted with the issuer encryption key, is included in said rights request signal.

25. The method as recited in claim 23, **characterised in that** the rights issuer:
- decrypts the content encryption key in the rights request signal with said issuer encryption key;
- encrypts said content encryption key with a first user encryption key associated with said client;
- places the encrypted content encryption key in a rights object; and
- transmits said rights object to said client.

26. The method as recited in claim 21 or 24, **characterised in that**:
- the client retrieves the encrypted content encryption key from the received rights object;
- decrypts the content encrypting key with a second user encryption key; and
- decrypts the digital media content with said content encryption key.

27. Method for updating of digital rights in a user client, **characterised in that**:
- the user client registers for a subscription-based service;
- digital media content is provided within said subscription-based service in a protected format to the user client; and
- said client automatically transmits a rights request signal, requesting digital rights for said operation, to a rights issuer device, with a periodicity defined by said subscription.

28. Method for updating of digital rights in a user client, **characterised in that**:
- the user client registers for a subscription-based service;
- digital media content is provided within said subscription-based service in a protected format to the user client;
- a rights issuer device detects that new right objects associated with said subscription are available;
- the rights issuer device pushes a message to said client that new right objects are available; and
- said client automatically transmits a rights request signal, requesting said new digital rights objects, to said rights issuer device, dependent on said digital media content.

29. The method as recited in claim 28, **characterised in that**:
- the rights issuer device pushes said message through SMS.

30. The method as recited in claim 28, **characterised in that**:
- the rights issuer device pushes said message to a Subscriber Identity Module SIM in said client, which SIM pushes the message to said client using SIM Application Toolkit.

31. The method as recited in any of the previous claims, **characterised in that** said operation comprises the step of rendering content of said digital media content.

32. The method as recited in any of the previous claims 1 - 30, **characterised in that** said operation comprises the step of copying a data file of said digital media content.

33. The method as recited in any of the previous claims 1 - 30, **characterised in that** said operation comprises the step of sending a data file of said digital media content.

34. The method as recited in any of the previous claims 1 - 30, **characterised in that** said operation comprises the step of modifying a data file of said digital media content.

35. The method as recited in claim 1, **characterised in that**:
- execution of said operation by said client requires permission from said issuer device;
- said issuer device sends a permission signal to said client in response to said rights request signal; and
- said permission signal enables said client to execute said operation.

36. Computer program product, for use with a computer system in a communication client, comprising computer program code means devised to make said computer system perform the steps of:
- initiating execution of an operation associated with digital media content provided in a protected format in said client; and
- automatically triggering transmission from said client of a rights request signal, requesting digital rights for said operation, to a rights issuer device, dependent on the scope of current rights objects.

37. The computer program product as recited in claim 36, further comprising computer program code means devised to make said computer system perform the steps of any of the previous claims 2 - 35.

38. The computer program product as recited in claim 36 or 37, further comprising a computer readable medium on which said computer program code means are stored.

39. A radio communication client, including a computer system and computer program code means devised to make said computer system perform the steps of:
- initiating execution of an operation associated with digital media content provided in a protected format in said client; and
- automatically triggering transmission from said client of a rights request signal, requesting digital rights for said operation, to a rights issuer device, dependent on the scope of current rights objects.

40. The radio communication client as recited in claim 39, further comprising computer program code means devised to make said computer system perform the steps of any of the previous claims 2 - 35.

41. The radio communication client as recited in claim 39 or 40, further comprising a computer readable medium on which said computer program code means are stored.
